# EUROPEAN PATENT APPLICATION

(11) **EP 4 296 204 A1**
(43) Date of publication of application: **27.12.2023**
(21) Application number: 21923638.7
(22) Date of filing: 17.02.2021
(51) Int. Cl.: B65G 57/03, B25J 9/02, B25J 15/02, B65G 47/91, B65G 47/82, B65G 61/00

(54) **STRUCTURAL ARRANGEMENT FOR A PALLETIZER HEAD AND CONTINUOUS MOVEMENT SYSTEM**

(30) Priority: 06.02.2021 BR 202021002282 U
(71) Applicant: Máquinas Sanmartin Ltda., 95020-972 Caxias do Sul (BR)
(72) Inventor: SANMARTIN, Jose Bernardo, 95084-370 CAXIAS DO SUL (BR)
(74) Representative: Albert, Florence Alice
(86) International application number: PCT/BR2021/050070
(87) International publication number: WO 2022/165568

(57) **Abstract**

The present utility model refers to a continuously moving palletizer head, in the field of devices for transporting, moving and piling cartons and packages in the area of beverages and food, more specifically consisting of a mechanical head connected to a robot, having the function of moving can containers or similar, organized in mosaics and pre-defined by software until its perfect piling and alignment over the pallet, with an innovative coverage of the side stoppers against damage to the moved material of fibreglass textile impregnated with PTFE covered with a pressure-sensitive silicone adhesive and protected with a synthetic PVC liner; and an innovative activator (17B) constituted by a pneumatic piston and a sliding guide (19) of self-lubricated melt polyamide.

## Description

This utility model refers to a palletizer head under continuous movement, in the field of devices for transportation, movement and piling of cartons and packages in the area of beverages and foods. It consists, more specifically, of a mechanical head connected to a robot, having the object of moving can containers or similar, organized in mosaics which are pre-defined by software, until its perfect piling and alignment within the pallet, with an innovation in the cover of side stoppers against damages to the handled product, in a fibreglass textile impregnated with PTFE covered with a pressure-sensitive silicone adhesive and protected with a synthetic PVC liner and an innovative activator (17B) constituted by a pneumatic piston and a sliding guide (19) of cast self-lubricated polyam ide.

Currently, in the state of the art, palletization systems use a fixed table to form their layers, said systems having palletizer heads awaiting the layer to be introduced by a system displacing said layer to its inner sides, fixing it to avoid the containers to be displaced during the horizontal movement of the head, to then displace the layer from the initial station to the final pallet. Generally, said systems may reach about 360 cycles per hour, being commanded by programmable logical controllers. Therefore, the solution currently used for palletization has a limited number of cycles, and, to meet the requirements of production and efficiency of the current packaging lines, we must duplicate the system, which increases energy consumption, requiring twice the area to install the system, besides being systems with limited efficiency rate. Another disadvantage of the current systems, limiting palletization speeds, is the waiting time as required to introduce a new layer of containers inside them, due to the maximum speed limit which cannot be infringed over the container layer, be it for the shape of the latter or for its fragility, since, when that speed is exceeded, the device may disrupt or damage the containers.

Another problem related to the speed refers to the inertia of the container layer, i. e. even if high speed is applied to start the introduction of the layer in the head, the container layer will require a space for deceleration, so to avoid its collision to the bottom of the head, which could disrupt or damage containers.

Another document may also be mentioned in the state of the art, which is BR 202014022378-4, which registration was granted, under the name *Devices Applied to Fixed or Moving Automatic Palletizer*, comprising an automation system grouped in a compact structure, receiving the cartons on the upper part, through a rotating conveyor, by means of a turning equipment to optimize its grouping, transporting and pushing the product through a pushing device to a discharge platform with a double gate opening, located on a lifting table falling and releasing the set of cartons over a pallet located over the floor or over a chain conveyor, and repeats the whole process until filling the desired height of cartons over the pallet.

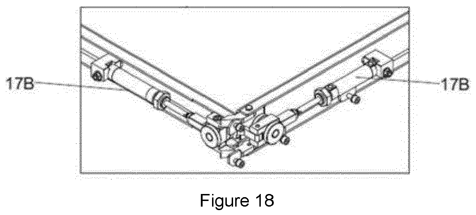

From the same applicant and inventor, the invention patent BR 102019013201-9, under the title Continuously Moving Palletizer Head and Palletization System in Continuous Movement through the Palletizer Head, discloses a continuously moving palletizer head, connected to a robot or another palletization equipment, wherein its application is intended to cargo movement, particularly in the industry and beverage and food distribution centers, wherein the construction head is essentially mechanical and adapted for working with an automated movement system. That invention comprises a device formed by a metal structure and an aluminium plate coupling the continuously moving head to a robot or to another moving equipment, being constituted by a side track system; a mechanical set known as a curtain, constituted by rollers, connected to a chain and guided by a motor system, including a traction device and a movable shaft moving said chain on said side tracks, sustaining the container layer within the head; and a centralizer acting next to the containers. There is a continuously moving system involving the scheduled interaction between the head and the robot or another moving device. That invention has a problem concerning the constructive embodiment of the activator by a pneumatic piston and rollers, causing slower movements, and being less safe for the protection of the handled products, with high maintenance costs due to the wear and tear of the aprts, as shown by Figure 18.

The present utility model, presented as an enhancement to the previous invention from the same applicant or inventor, comprises a device formed by a metal structure coupled to an aluminium plate or another material with similar mechanical characteristics, allowing to couple the continuously moving head to a robot, intended for the palletization of full layers. Over the previous invention, this invention provides a system with side tracks (4 and 5) and side stoppers (17) covered by a fibreglass textile impregnated with PTFE, covered with a pressure-sensitive silicone adhesive and protected with a PVC liner, a high temperature resistant material to protect the product to be moved; an innovative activator (17B) constituted by a pneumatic piston with a sliding guide of cast self-lubricated polyamide (19).

The invention is constituted by a mechanical curtain formed by aluminium rollers, carbon fibre or another material (7) with similar mechanical characteristics, said mechanical set being connected to an ASA-type current (8) and guided by a motor system, along said side tracks (4 and 5), having this set the purpose to sustain the container (2) layer within the head (C1). A set known as centralizer (16), formed by side moving stoppers (17), is activated by activators (17B) which are constituted by pneumatic pistons containing, on their edges, sliding devices or guides (19) made of a cast polyamide-based material with self-lubrication. That device has the purpose to guide the moving stoppers (17), by moving the containers to the center of the head (C1), guiding the formation of the layer over the pallet, with the purpose to keep the container (2) layer joined while being dragged to within the head (C1) and centralize said container layer within said head, providing a reference known for the disposition of the layer over the pallet, assuring square, aligning and the plumb line of the container pile.

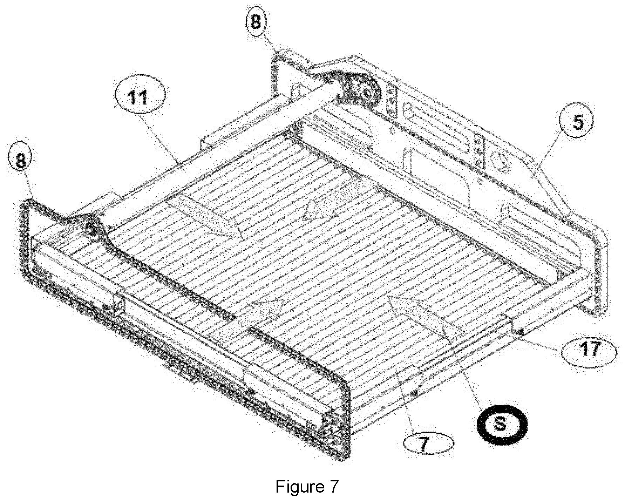

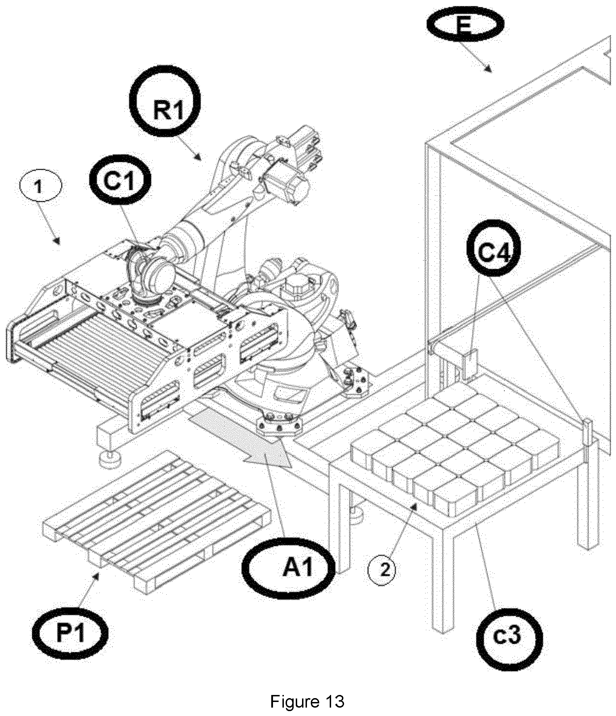

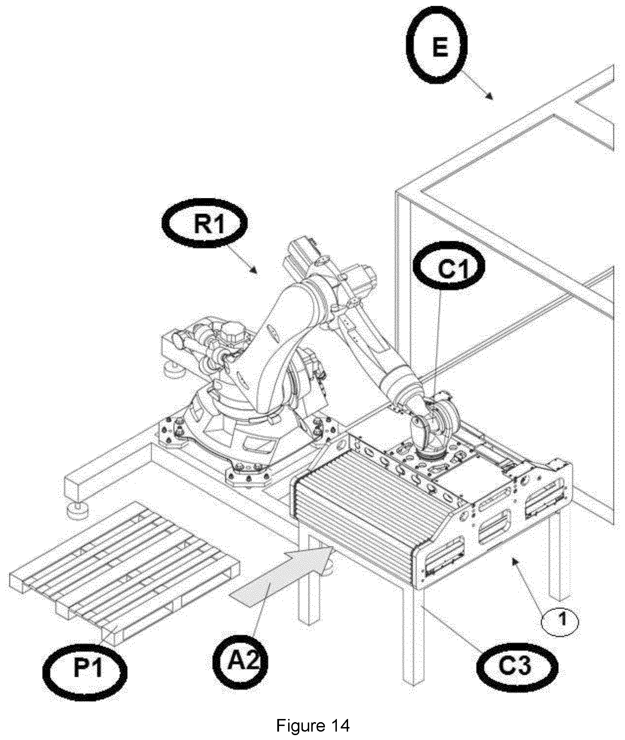

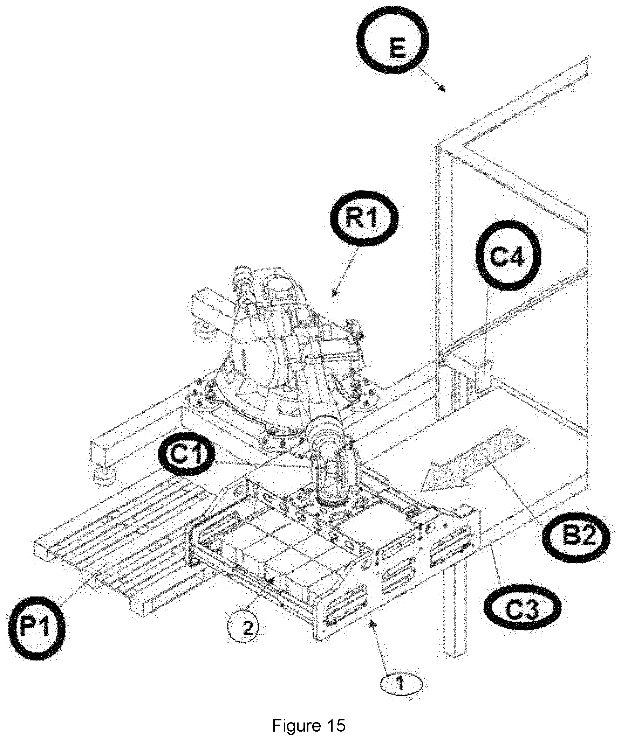

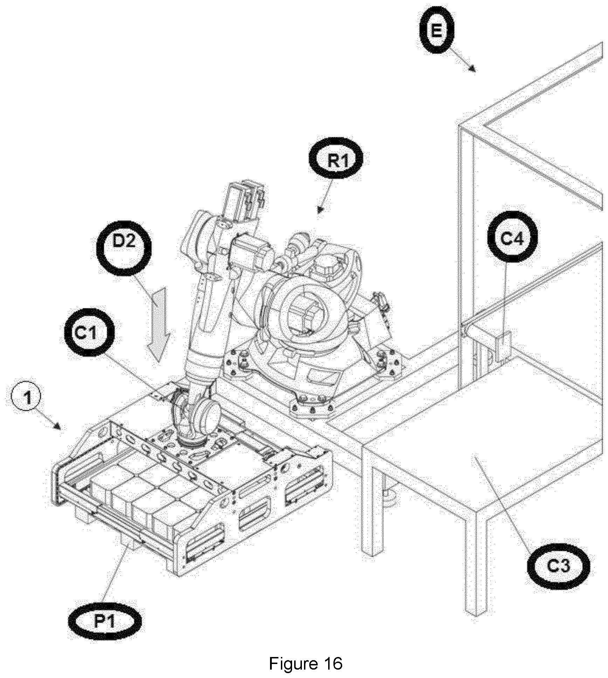

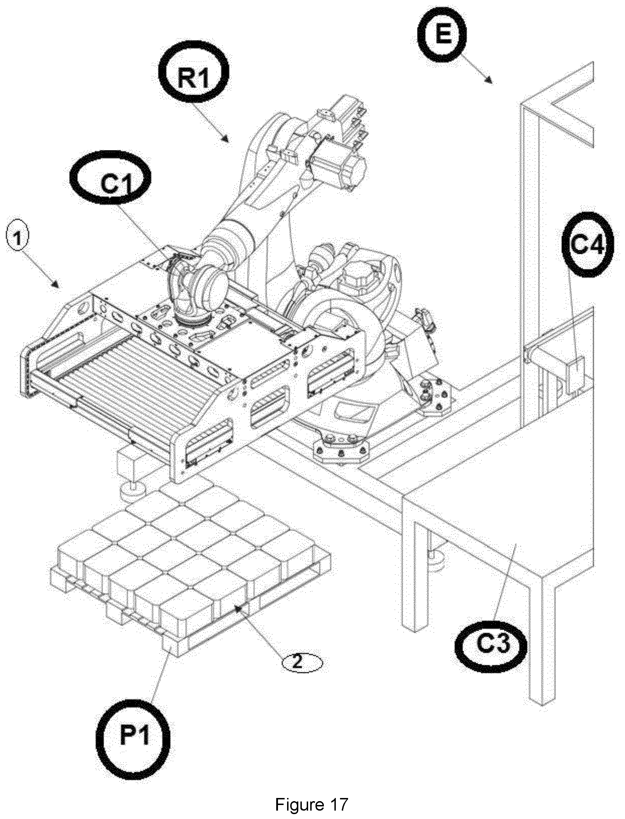

We will now disclose the palletization system as presented for enhancement of the activating part (17B), as well as the innovative cover (18) for the side stoppers (17), also included as an object of this utility model patent application, comprising a device (1) in the form of a head (C1) coupled to a robot (R1), allowing to move container (2) layers organized over a layer table (C3) positioned at a compatible height from the floor level, being thus easily reached by the operators. Said device (1) positions the container (2) over a pallet (P1), which operation is performed continuously, while the container (2) layers are delivered to the layer table (C3). The device (1) is formed by a structure made of metal or another appropriate material to support the full system, coupled to a plate of aluminium (3) or another material with similar mechanical characteristics, allowing to couple the continuously moving head (C1) to a robot (R1) (Figures 13 to 16) or other moving device, intended for the palletization of full layers. There is a side track system (4) and (5), made of nylon or other material with similar mechanical characteristics. The invention also includes carbon fibre or another material with similar mechanical characteristics, said mechanical set being connected to an ASA-type chain (8) and guided by a motor system (9), including a traction device (10) and moving shaft (11), so to move the chain (8) along said side tracks (4) and (5), wherein said set has the purpose to sustain the container (2) layer within the device (1). On the upper central part of the device (1), a crosspiece set (12) is located, constituted by side crosspieces (13) supported on the edges of the set by means of parallel plates (14), so to form a base to receive said aluminium plate (3) containing the connector (15) for coupling the device (1) to the robot (R1). A set known as a centralizer (16) is formed by moving side stoppers (17) covered by a fibreglass textile impregnated with PTFE covered with a pressure-sensitive silicone adhesive, and protected with a PVC synthetic liner (18) with linear movements from the activation performed by an innovatively constituted activator, for having a pneumatic piston (17B) coupled to a sliding guide (19), made of engineering polymer, more specifically self-lubricated melt polyamide, by means of coupling pins (20), with the purpose to keep the container (2) layer joined during its dragging process to within the head and centralizing said container (2) layer within said device (1), providing a known reference to locate the layer over the pallet (P1), assuring square and the plumb line of the container pile. Fig. 7 shows, by means of arrows (S), the movement of the moving side stoppers (17) covered, in this enhancement, by fibreglass textile impregnated with PTFE and covered with a pressure-sensitive silicone adhesive and protected with a PVC liner (18). The system of the invention works jointly with a layer forming station (E), delivering organized layers according to product characteristics, as per the mosaics as previously indicated by software controlling the container (2) layer forming station (E). The robot (R1) or another palletization device, when informed that there is a ready layer over the layer table (C3), displaces the head (C1) over the container (2) layer, positioning said head (C1), centralized with the container (2) layer. In that moment, a sensing device (C4) indicates that the head (C1) is positioned on the working area. The curtain (6) is positioned so to allow the robot (R1) to position the head (C1) over the container (2) layer, levelling said curtain (6) with the layer table (C3). In that same movement, the layer centralizer set (16) is fully open, offering lack between said centralizer (16) and the container (2) layer, absorbing eventual imprecision in the organization of the containers within the layer. Once the head (C1) is positioned over the container (2) layer and the curtain (6) is aligned to the layer table (C3), the centralizer set (16) closes itself, moving the side moving stoppers (17) covered with a fibreglass textile impregnated with PTFE, covered with a pressure-sensitive silicone adhesive and protected with a synthetic PVC liner (18) on the four sides of the set, joining the containers (2) and leaving the container (2) layer always with the same side measurements, centralized within the head (C1). That centralizing process is performed during the horizontal movement (A1) of the continuously moving head (C1), as shown by Figure 13. During the horizontal movement (A2), which speed is determined to reach the maximum number of cycles per hour in the system, the curtain (6) starts a horizontal movement backwards, with the same speed, from the robot (R1) movement. That movement makes the curtain (6) to have zero speed movement over the layer table (C3), dragging the container (2) layer upside the curtain (6), as shown by Figure 14. Upon identifying, by means of the feedback on the spatial position of the head (C1), that the container (2) layer is fully positioned within the head (C1), by means of the movement (B2), as per Figure 15, the robot (R1) continues its displacement and, by means of the movement (D2) (Figure 16), is located in the palletization position. Once vertically positioned over the container layer pile (2) on the pallet (P1), the head (C1) receives the command to open the curtain (6), displacing it horizontally, putting the container (2) layer in the palletization position, i. e. in the container (2) pile. At the end of this movement, the robot (R1) vertically lifts the head (C1), until the container (2) layer has fully exited from inside the head (C1) / device (1) (Figure 17), starting a new cycle.

The advantages of this system with a continuously moving palletizer head are a significant area reduction of 50% for palletization, increase in the number of cycles per hour in 75%, energy consumption reduction, lower equipment investment, higher system efficiency, low cost and higher safety against high temperatures, with less possibility of friction due to the innovative covering of fibreglass textile impregnated with PTFE covered with a pressure-sensitive silicone adhesive and protected with a PVC liner.

The advantage of the new embodiment of the activator with the new sliding guide system (19) constituted of a cast self-lubricated polyamide, consists of better movement of the device with lower cost, maximum operation availability due to less preventive maintenance stops and the increased working life of the constituents of the mechanical set.

For better understanding, we present below the figures, disclosed as follows:

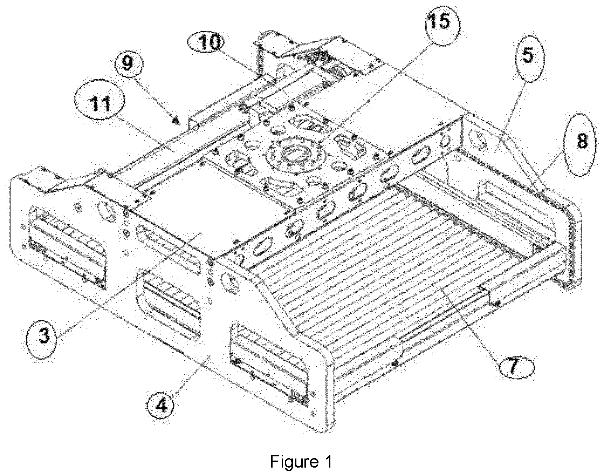

- Fig. 1: perspective view of the head;

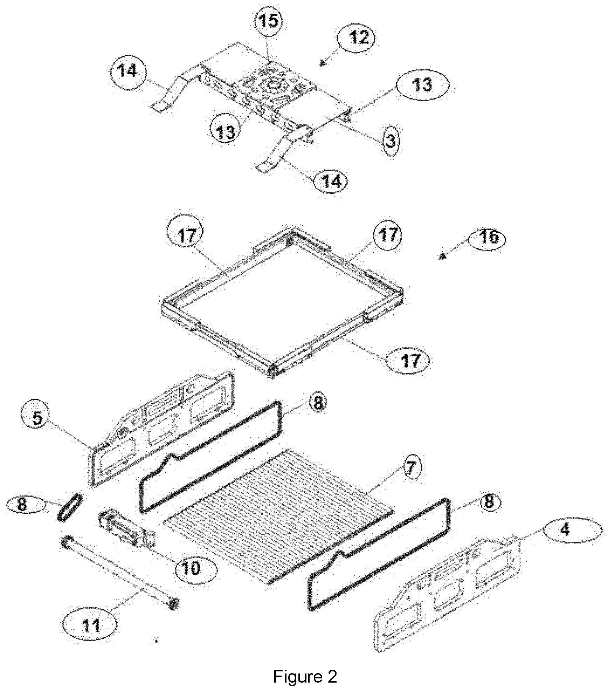

- Fig. 2: exploded perspective view of the head;

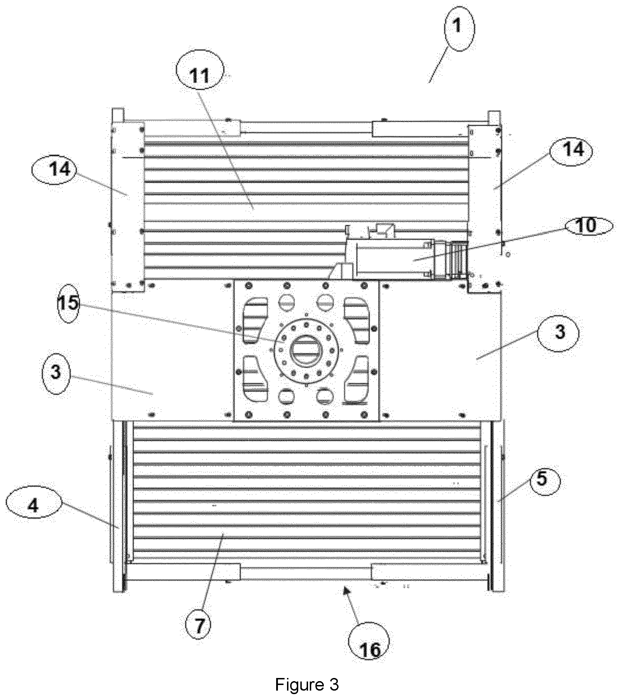

- Fig. 3: upper view of the head;

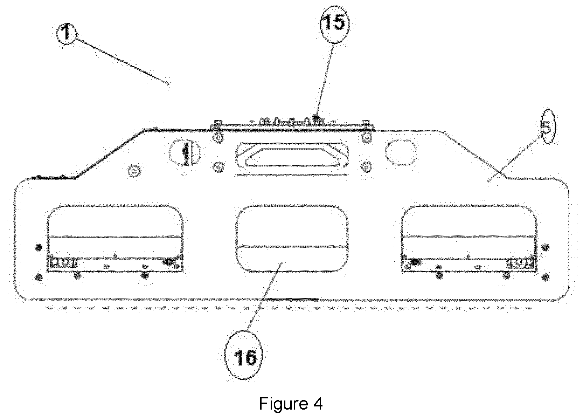

- Fig. 4: side view of the head;

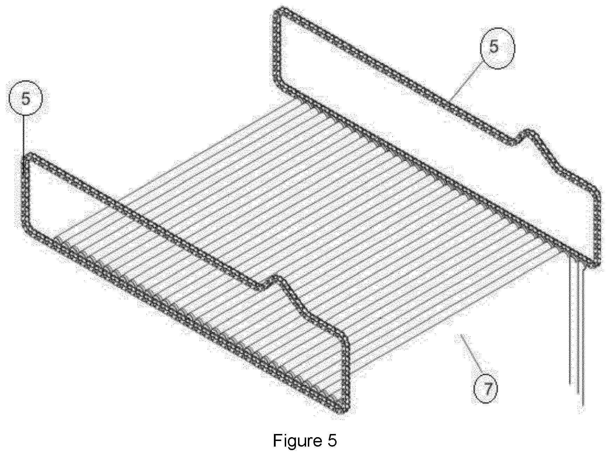

- Fig. 5: perspective view of the roller set and the chains;

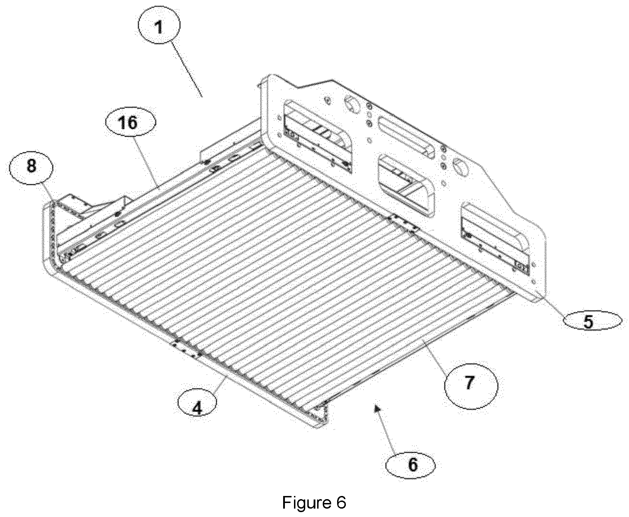

- Fig. 6: lower view of the head;
- Fig. 7: perspective view of the head, with arrows indicating the movement of the centralizer set;

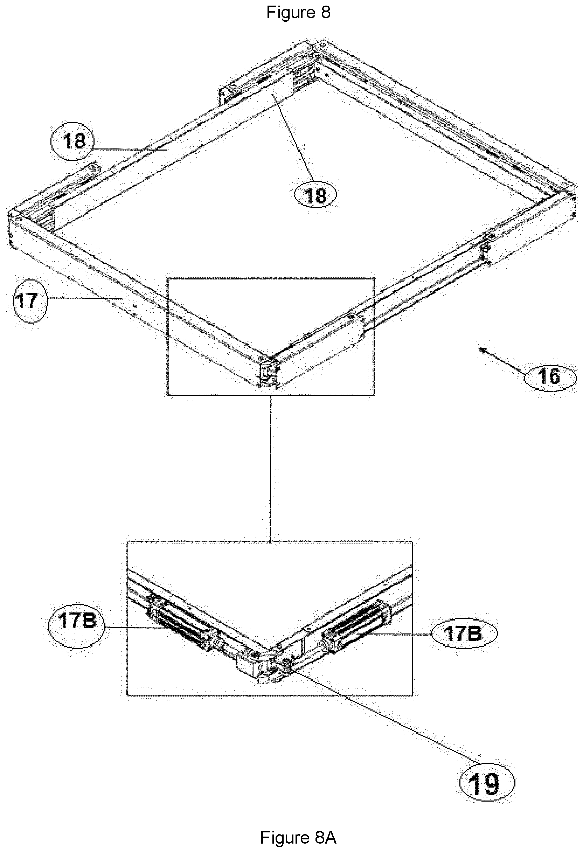

- Fig. 8: perspective view of the centralizer set with the cover;
- Fig. 8A: view of the activation of the innovative activator;

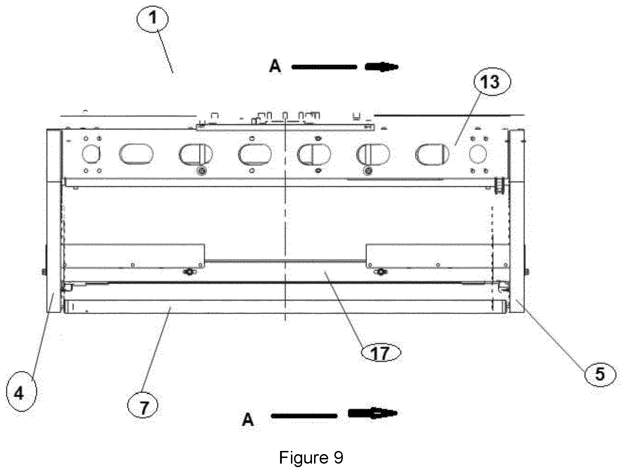

- Fig. 9: front view of the head;

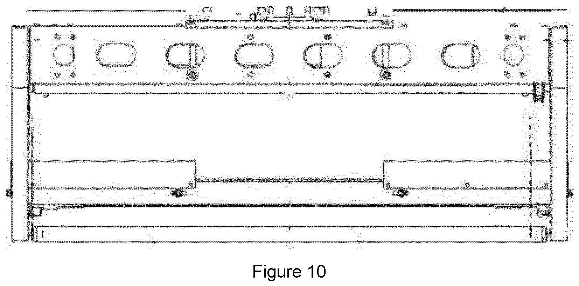

- Fig. 10: upper view of the head;

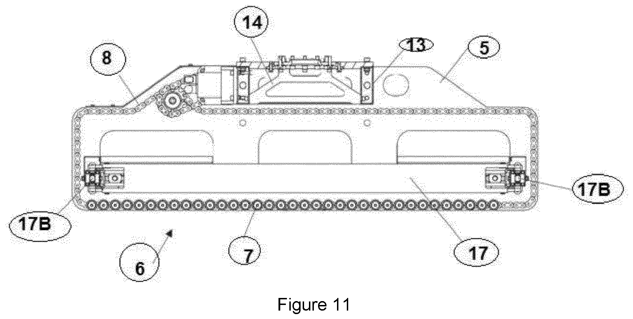

- Fig. 11: side view per the A-A cut;

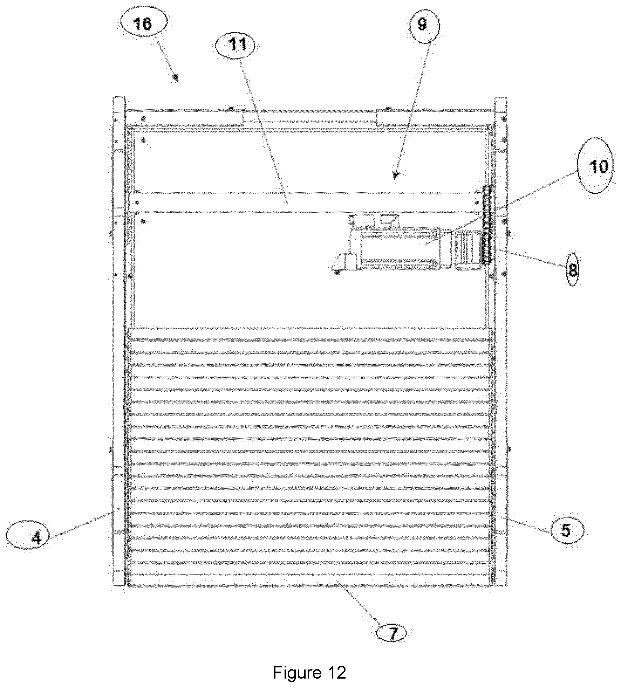

- Fig. 12: upper view of the head identifying of the conveyor movement;
- Fig. 13: perspective view showing the head coupled to a robot;
- Fig. 14: perspective view showing the movement of the robot with the head being positioned over the container;
- Fig. 15: perspective view showing the robot with the head coupled to the container;
- Fig. 16: perspective view showing the robot with the head coupled to the container, moving towards the pallet;
- Fig. 17: perspective view showing the robot with the head coupled to the container, leaving it over the pallet;
- Fig. 18: front view of the old activator system; and

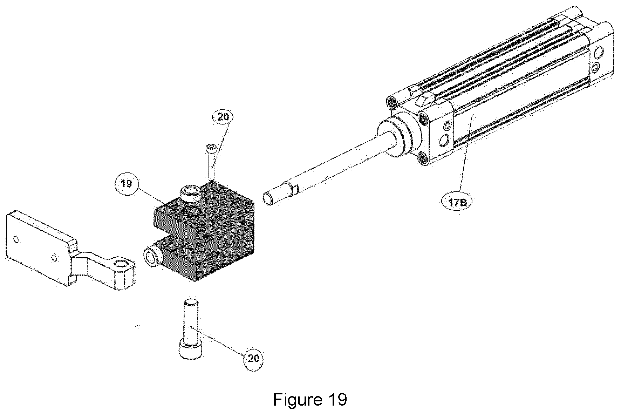

- Fig. 19: exploded view of the new activator.

## Claims

1. **CONSTRUCTIVE ARRANGEMENT IN A PALLETIZING HEAD, characterized by** a device formed by a metal structure coupled to a plate made of aluminium or other material with similar mechanical characteristics, allowing to couple the continuously moving head to a robot, intended for the palletization of full layers, wherein the side track system (4 and 5) with side stoppers (17) is covered by a fibreglass textile impregnated with PTFE covered with a pressure-sensitive silicone adhesive and protected with a PVC liner, a material resistant against high temperature for protection of the material while being moved; and an innovative activator (17B) constituted by a pneumatic piston with a cast self-lubricated polyamide sliding guide (19).

2. **CONSTRUCTIVE ARRANGEMENT IN A PALLETIZING HEAD, characterized by** a mechanical curtain formed by aluminium rollers, carbon fibre or other material (7) with similar mechanical characteristics, said mechanical set being connected to an ASA-type chain (8), guided by a motor system, along said side tracks (4 and 5), that set having the function to sustain the container (2) layer within the head (C1), while a set known as a centralizer (16), formed by side moving stoppers (17), is activated by activators (17B) constituted by pneumatic pistons containing, on their edges, sliding devices or guides (19) produced from cast self-lubricated polyamide based material, since that device is entitled to guide the moving stoppers (17), moving the containers to the centre of the head (C1), guiding the formation of the layer over the pallet, having the function of keeping the container (2) layer joined during its dragging process to within the head (C1) and centralizing the layer of said containers within said head, providing a known reference for deposition of the layer over the pallet, thus assuring square, alignment and plumb line of the container pile.

3. **PALLETIZING SYSTEM UNDER CONTINUOUS MOVEMENT WITH A PALLETIZER HEAD, characterized by** a Palletization System disclosed to enhance the activator part (17B), as well as the innovative cover (18) for the side stoppers (17), which is another object of this utility model patent application, comprising a head-shaped (C1) device (1) coupled to a robot (R1), allowing to move container (2) layers organized over a layer table (C3), positioned at a height which is compatible with the floor level, thus being easily reached by the operators, wherein said device (1) draws the container (2) over a pallet P1, which operation is continuously performed, while the container (2) layers are delivered to the layer table (C3).

4. **PALLETIZING SYSTEM UNDER CONTINUOUS MOVEMENT WITH A PALLETIZER HEAD, characterized by** a metal structure or another appropriate material to sustain the full system, coupled to an aluminium plate (3) or other material with similar mechanical characteristics, allowing to couple the continuously moving head (C1) to a robot (R1) (Figures 13 to 16), intended for the palletization of full layers, supported by a side track system (4) and (5), made of nylon or another material with similar mechanical characteristics, being an integral part of the invention, a mechanical curtain (6), formed by rollers (7) made of aluminium, carbon fibre or another material with similar mechanical characteristics, said mechanical set being connected to an ASA-type chain (8), guided by a motor system (9), including a traction device (10) and a motor shaft (11) for moving the chain (8) along said side tracks (4) and (5), having this set the function to sustain the container (2) layer within the device (1).

5. **PALLETIZING SYSTEM UNDER CONTINUOUS MOVEMENT WITH A PALLETIZER HEAD, characterized by** a set known as a centralizer (16) being formed by moving side stoppers (17) covered by a fibreglass textile impregnated with PTFE, covered with a pressure-sensitive silicone adhesive and protected with a PVC synthetic liner (18) with linear movements from the activation performed by an activator with an innovative embodiment, for having a pneumatic piston (17B) coupled to a sliding guide (19), constituted by engineering plastics, more specifically cast self-lubricated polyamide, by means of coupling pins (20), having the function of keeping the container (2) layer joined during its dragging process to within the head and centralizing said container (2) layer within said device (1), providing a known reference for the deposition of the layer over the pallet (P1), assuring square and the plumb line of the container pile, and the movement of the moving side stoppers (17) covered, in this enhancement by fibreglass textile impregnated with PTFE, covered with a pressure-sensitive silicone adhesive and protected with a PVC liner (18), as shown on Figure 7 by means of arrows (S).

6. **PALLETIZING SYSTEM UNDER CONTINUOUS MOVEMENT WITH A PALLETIZER HEAD, characterized by** a layer forming station (E), delivering organized layers as per the product characteristics, according to the mosaics as previously disclosed by the software controlling the container (2) layer formation station (E), wherein the robot (R1) or another palletization device, upon being informed that there is a layer ready over the layer table (C3), displaces the head (C1) over the container (2) layer, positioning said head (C1), in a central position with the container (2) layer and, in that moment, a sensorial device (C4) indicates that the head (C1) is positioned within the working area.

7. **PALLETIZING SYSTEM UNDER CONTINUOUS MOVEMENT WITH A PALLETIZER HEAD, characterized by** a curtain (6) positioned in such a way to allow the robot (R1) to position the head (C1) over the container (2) layer, levelling said curtain (6) with the layer table (C3) and, in the same movement, the layer centralizer set (16) is fully opened, granting slack between said centralizer (16) and the container (2) layer, thus compensating an eventual imprecision in the organization of the containers within the layer, and, once the head (C1) is positioned over the container (2) layer and the curtain (6) aligned with the layer table (C3), the centralizer set (16) closes itself, moving the movable side stoppers (17) covered with a fibreglass textile impregnated with PTFE covered with a pressure-sensitive silicone adhesive and protected with a synthetic PVC liner (18) on the four sides of the set, joining the containers (2) and leaving the container (2) layer always with the same side measurements, centralizing them within the head (C1).

8. **PALLETIZING SYSTEM UNDER CONTINUOUS MOVEMENT WITH A PALLETIZER HEAD, characterized by** a centralized process performed during the horizontal movement (A1) of the continuously moving head (C1), as shown by Figure 13, the curtain (6) starting a horizontal movement backwards, with the same speed, from the robot (R1) movement, making the curtain (6) having zero speed movement over the layer table (C3), dragging the container (2) layer over the curtain (6), as per Figure 14, wherein, upon identifying, by means of the feedback of the spatial position of the head (C1), that the container (2) layer is fully positioned within the head (C1), by means of the movement (B2), as per Figure 15, the robot (R1) continues its displacement and, by means of the movement (D2) (Figure 16), is located in the palletization position, subsequently receiving the command to open the curtain (6), horizontally displacing it, fitting the container (2) layer in the palletization position, i. e. on the container (2) pile and, at the end of this movement, the robot (R1) vertically lifts the head (C1) until the container (2) layer has fully exited from the head (C1), as shown by Figure 17, starting a new cycle.
